Europäisches Patentamt

European Patent Office

Office européen des brevets

(11) Numéro de publication: **0 507 660 B1**

(12) **FASCICULE DE BREVET EUROPEEN**

(45) Date de publication de fascicule du brevet: **05.07.95** (51) Int. Cl.⁶: **C23C 2/32**, C23G 1/02

(21) Numéro de dépôt: **92400869.1**

(22) Date de dépôt: **27.03.92**

(54) **Procédé et dispositif pour le traitement superficiel d'un produit métallique séjournant dans une solution réactive notamment pour le décapage ou la galvanisation de tôles laminées à chaud.**

(30) Priorité: **04.04.91 FR 9104109**

(43) Date de publication de la demande:
**07.10.92 Bulletin 92/41**

(45) Mention de la délivrance du brevet:
**05.07.95 Bulletin 95/27**

(84) Etats contractants désignés:
**AT BE CH DE DK ES FR GB GR IT LI LU NL PT SE**

(56) Documents cités:
**DE-C- 974 058**
**FR-A- 871 964**
**GB-A- 966 521**

(73) Titulaire: **SOLLAC**
**Immeuble Elysées-La Défense, 29 Le Parvis**
**F-92800 Puteaux (FR)**

(72) Inventeur: **Nogues, Michel**
**5 Sente des Glaisières**
**F-78510 Triel sur Seine (FR)**

(74) Mandataire: **Martin, Jean-Paul et al**
**c/o CABINET LAVOIX**
**2, Place d'Estienne d'Orves**
**F-75441 Paris Cedex 09 (FR)**

Rank Xerox (UK) Business Services
(3.10/3.09/3.3.3)

## Description

La présente invention concerne le traitement superficiel d'un produit métallique séjournant dans une solution réactive, notamment pour son décapage ou sa galvanisation. Plus particulièrement, l'invention concerne le décapage de bandes d'acier ordinaire et inoxydable, laminées à chaud dans les installations métallurgiques, préalablement à leur laminage à froid.

On sait que les bandes d'acier laminées à chaud sont recouvertes d'une couche d'oxydes, la calamine, matière dure, cassante et abrasive qu'il importe d'enlever avant laminage à froid. En effet, s'allongeant moins que l'acier, la calamine s'incrusterait dans le métal, et réduirait très sensiblement ses aptitudes à l'emboutissage. Abrasive, elle détruirait rapidement d'état des surfaces des cylindres, l'aspect des tôles serait médiocre, sans brillant, impropre au polissage et aux divers revêtements ultérieurs.

Cette calamine se forme dans les cages finisseuses des trains à chaud. sur les tables de refroidissement et au bobinage.

La calamine, mélange des trois oxydes FeO, Fe3O4 et Fe2O3, et également d'oxydes de chrome dans le cas des aciers inox, est classiquement décapée par immersion des bandes d'acier dans plusieurs bacs contenant un acide chaud, tel que l'acide sulfurique, l'acide chlorhydrique, l'acide nitrique, l'acide fluorhydrique ou d'autres acides selon les cas. On utilise ainsi généralement quatre ou cinq bacs pour parvenir à des niveaux de décapage suffisant, chacun ayant 10 à 15 mètres de longueur et le produit à décaper y séjournant pendant une à plusieurs minutes.

On s'est efforcé de réduire le nombre des bacs nécessaires en accélérant la vitesse de décapage, afin de réaliser ainsi une économie sur les investissements et la quantité d'acide nécessaires. Cet objectif est d'autant plus justifié que le décapage est relativement faible dans le premier bac, qui a surtout pour fonction d'amener le produit métallique à la température appropriée.

Pour résoudre ce problème, on a déjà proposé de générer, dans la solution réactive dans laquelle est immergé le produit métallique à décaper, des vibrations haute fréquence telles que des ultrasons dont l'action va s'ajouter à celle du bain pour briser la couche de calamine Ces vibrations haute fréquence sont communiquées aux parois du bac ou à la solution réactive. Le document GB-A 966521 propose également de soumettre la bande elle-même à un champ électromagnétique, au moyen d'un ou plusieurs enroulements disposés à son voisinage et parcourus par un courant alternatif. On exerce ainsi sur la bande un effet cyclique d'attraction, ce qui la fait vibrer, et ces vibrations sont ainsi transmises au bain d'acide par son intermédiaire. Grâce à ces divers modes d'imposition de vibrations haute fréquence à la solution, on observe une augmentation de la vitesse de décapage, qui peut être de 10 à 20% environ, ou même dans les meilleurs cas atteindre 70 à 80%. Mais les meilleures performances ne sont obtenues qu'avec des puissances vibratoires injectées dans le liquide très élevées, dont il s'avère qu'elles provoquent des phénomènes de cavitation au sein dur liquide.

Come on le sait, la cavitation acoustique dans un liquide est un phénomène lié à des réductions locales de la pression du fluide, dues aux oscillations négatives de la pression acoustique, qui peuvent entraîner des ruptures du liquide et la formation de bulles. Le seuil d'apparition de la cavitation dans un liquide dépend de multiples paramètres, notamment la valeur de l'énergie ultrasonore injectée. Il ressort de diverses études menées jusqu'à présent, que les deux phénomènes essentiels responsables de l'effet mécanique de la cavitation sont basés sur l'apparition d'ondes de chocs et de microjets accompagnant l'effondrement des bulles

L'invention a pour but d'améliorer les performances du décapage assisté par vibrations haute fréquence de produits métalliques, tels que des tôles laminées à chaud.

Le procédé selon l'invention de traitement superficiel d'un produit métallique plongé dans une solution de décapage ou de galvanisation, procédé dans lequel on imprime au produit des vibrations haute fréquence par l'intermédiaire d'électroaimants disposés face au-dit produit, est caractérisé en ce que l'on utilise au moins un couple d'électroaimants placés de chaque côté du produit et en regard l'un de l'autre et on les alimente par des courants alternatifs de même fréquence et déphasés de $\frac{\pi}{2}$.

On a constaté que lorsqu'on génère les ultrasons dans le liquide, des puissances très élevées sont nécessaires pour obtenir la cavitation souhaitée, près de la surface du produit (de l'ordre de 5 à 15 watts par litre) En fait, ce but n'est le plus souvent pas atteint, car une trop grande proportion de l'énergie ultrasonore est dissipée, de sorte qu'on n'atteint pas le seuil de cavitation au voisinage du produit.

L'invention réalise donc une injection directe des vibrations dans le produit métallique d'une manière particulièrement efficace, ce qui comme l'expérience l'a montré, permet d'atteindre de manière plus sûre le seuil de cavitation nécessaire pour une bonne éfficacité du décapage.

Suivant ne forme de réalisation du procédé conforme à l'invention, on choisit la fréquence et l'amplitude des vibrations de manière à provoquer l'etablissement dans la solution réactive de phénomènes de cavitation au voisinage de la surface du produit.

Suivant une forme particulière de réalisation de l'invention le produit est une tôle d'acier calaminée immergée dans un bain d'acide, et la fréquence des vibrations du produit est comprise entre environ 4000Hz et 50000 Hz.

On observe dans ces conditions une très importante diminution du temps nécessaire au décapage du produit par rapport à celui correspondant à l'absence de vibrations ultrasonores, cette diminution étant de l'ordre de 60 à 80%.

Le dispositif pour la mise en oeuvre de ce procédé, également visé par l'invention, ayant au moins un bac pour traiter un produit metallique (1) dans une solution réactive (7) et comprend dans ce bac au moins un couple d'électro-aimants disposés en regard l'un de l'autre de part et d'autre du produit métallique, pouvant être alimentés par des courants de même fréquence et exercer chacun sur le produit une force d'attraction périodique, les forces exercées par chaque électro-aimant étant déphasées, par exemple de $\pi/2$.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue schématique en élévation longitudinale d'un produit métallique tel qu'une tôle, et d'un couple d'électro-aimants disposés de part et d'autre de celle-ci conformément à l'invention.

La figure 2 illustre schématiquement un circuit électrique d'excitation des électro-aimants de la Fig.1.

Les figures 3 et 4 montrent deux diagrammes illustrant la variation dans le temps de l'intensité du courant et de la force d'attraction sur la tôle générée dans chaque électro-aimant.

La figure 5 est un diagramme illustrant la variation dans le temps de la force résultante exercée sur la tôle.

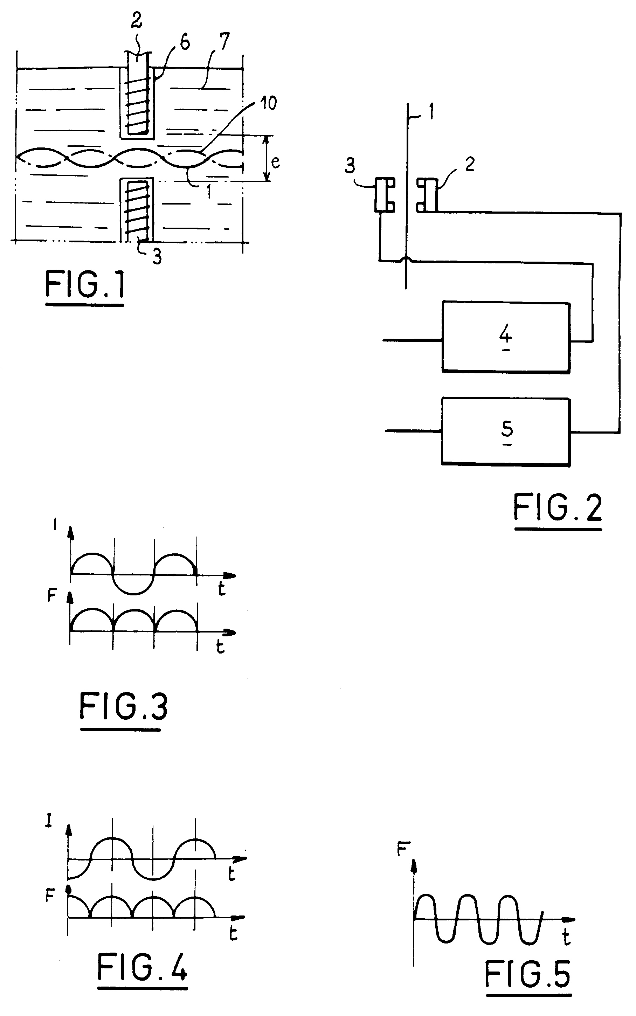

On voit à la Fig.1 un produit métallique constitué par une tôle 1 en défilement dans un bac non représenté, rempli d'une solution réactive 7 telle que de l'acide chlorhydrique, de façon connue en soi afin d'être décapé de sa couche de calamine. De part et d'autre de la tôle 1, sont disposés, immergés dans la solution réactive 7, deux électro-aimants 2 et 3, placés l'un au-dessus de la tôle, et l'autre au-dessous. L'entrefer e est choisi à une valeur appropriée, et les électro-aimants 2 et 3 sont parcourus par un courant d'intensité I et de fréquence appropriées pour générer dans la tôle 1 elle-même, ainsi que dans les couches de liquide situées au contact des surfaces opposées de la tôle 1, des vibrations ultra-sonores haute fréquence. A cet effet chaque électro-aimant 2, 3 est relié à un amplificateur basse fréquence respectif 5, 4, le circuit électrique étant classiquement complété par divers appareils de mesure non représentés (accéléromètre, wattmètre, fréquencemètre analyseur de spectre...).

Les électro-aimants 2, 3 étant immergés dans la solution corrosive. doivent être protégés par une enveloppe 6 adaptée, par exemple réalisée en un polymère tel que le "Téflon".

La puissance ultrasonore ainsi injectée dans la tôle 1 est choisie de manière à ce que les vibrations de la tôle communiquent au liquide une accélération supérieure au seuil de cavitation Les diagrammes des Fig.3 et 4 montrent le décalage de $\pi/2$ des deux courbes de l'intensité I du courant et de la force F d'attraction en fonction du temps t, dans le temps, sur la tôle 1, générée par chaque électro-aimant 2, 3. Ces électro-aimants n'exercent chacun sur un produit non aimanté tel que la tôle 1, que des forces F d'attraction, aussi bien pendant les alternances positives que les alternances négatives du courant I qui les parcourt. Compte tenu du décalage précité de $\pi/2$, la tôle 1 oscille donc à une fréquence N double de la fréquence du courant I (Fig.5).

On voit sur la Fig.1, à une échelle très exagérée pour la commodité de la description, la déformation sinusoïdale de la tôle 1 à un instant t pendant sa mise en vibration à haute fréquence, ainsi que la forme qu'elle affecte à l'instant $t' = t \pm 1/2N$, représentée par la ligne en trait mixte 10.

Exemple numérique

L'entrefer e est compris entre 2 et 20mm, la tôle 1 ayant une épaisseur inférieure à cet entrefer et défilant dans le bain à une vitesse déterminée.

Le courant a une intensité I = 60 Ampères par électro-aimant, et une fréquence comprise entre environ 2000 Hz et 25000 Hz, les électro-aimants 2 et 3 étant excités avec un déphasage de $\pi/2$. La puissance injectée est supérieure à celle nécessaire à l'obtention de la cavitation dans la solution, et est de l'ordre de quelques kW au niveau de la tôle 1, par exemple 8 kW par électro-aimant. Cette puissance ultrasonore permet de dépasser le seuil de cavitation, qui est de 6500 à 13000 m.s$^{-2}$ dans uun liquide tel que l'eau à une température de 20°C, la tôle 1 subissant une accélération au moins égale à cette valeur. Comme il a été dit, la tôle vibre à une fréquence double de celle du courant alimentant les électro-aimants, soit de 4000 à 50000 Hz.

En pratique, la puissance convenable par électro-aimant dans une installation industrielle mettant en oeuvre l'invention peut se situer avantageusement entre 10 et 20 kW environ.

Les courants de Foucault provoquent un échauffement du produit métallique 1, favorable à un bon décapage, et permettent de réduire son temps de mise en température. Ceci est un élément favorable à la réduction du nombre de bacs nécessaires, des électro-aimants 2, 3 étant disposés de préférence dans le ou dans les premiers bacs de décapage.

Il est possible que les ultrasons générés dans la tôle 1 elle-même, contribuent à fissurer la couche de calamine, et ainsi à faciliter son attaque par la solution acide. D'autre part, ces ultrasons brassent la couche limite de solution réactive 7 au voisinage de la tôle 1, empêchant ainsi l'appauvrissement de cette couche limite en acide et lui permettant de maintenir son efficacité corrosive. Les pertes par courants de Foucault tendent à augmenter avec la fréquence du courant, et la cavitation est la meilleure dans le bas de la gamme des fréquences mentionnées ci-dessus.

En variante il est possible de disposer les électro-aimants 2, 3 hors des bacs, ce qui supprime tout problème de corrosion. Mais dans le choix des puissances injectées, il est alors nécessaire de tenir compte de l'amortissement des vibrations entre les électro-aimants et des bacs.

Un seul électro-aimant serait insuffisant, car le mouvement d'éloignement de la tôle 1 par rapport à lui ne serait provoqué que par la gravité de la tôle, compte tenu du fait que la force d'attraction de l'aimant est toujours orientée dans le sens pendant les alternances positives et négatives du courant, de sorte qu'on ne pourrait ainsi obtenir un résultat satisfaisant.

Pour une tôle 1 d'une largeur de 1 mètre environ, un seul couple d'électro-aimants 2, 3 est normalement suffisant. Par contre, pour une tôle plus large, il peut être nécessaire de mettre en oeuvre 2 ou 3 couples d'électro-aimants réparties sur la largeur de la tôle.

Il est également possible de disposer une pluralité de couples d'électroaimants le long du produit, afin de mieux répartir l'énergie injectée sur la longueur de celle-ci. Avantageusement, les couples sont implantés face à des ventres de vibration du produit.

Le procédé selon l'invention est aussi applicable au décapape de tôles fixes, et non uniquement de tôles en défilement dans des bacs comme indiqué ci-dessus. Il peut aussi être appliqué à des pièces métalliques différentes, telles que des tubes. De plus l'invention est également utilisable pour d'autres traitements de surface que le décapage, par exemple la galvanisation de produits en défilement: dans ce cas l'effet technique obtenu, toujours observé au-delà du seuil de cavitation, réside dans une amélioration de la mouillabilité de la tôle, procurant un gain de qualité du revêtement.

Il convient enfin de noter que la distance entre la tôle 1 et les électro-aimants 2, 3 peut être avantageusement asservie, par des moyens connus en soi et non représentés.

**Revendications**

1. Procédé de traitement superficiel d'un produit métallique (1) séjournant dans une solution réactive (7), notamment pour son décapage ou sa galvanisation, selon lequel on imprime au produit des vibrations haute fréquence par l'intermédiaire d'électroaimants disposés face audit produit, caractérisé en ce qu'on utilise au moins un couple d'électro-aimants (2, 3) placés de chaque côté de ce dernier et en regard l'un de l'autre, et on les alimente par des courants alternatifs (I) de même fréquence et déphasés de $\pi/2$.

2. Procédé selon la revendication 1, caractérisé en ce qu'on choisit la fréquence et l'amplitude des vibrations haute fréquence de manière à provoquer l'établissement dans la solution réactive, de phénomères de cavitation au voisinage de la surface du produit (1).

3. Procédé selon la revendication 2, dans lequel le produit est une tôle (1) d'acier calaminée, immergée dans un bain d'acide (7), caractérisé en ce que la fréquence des vibrations du produit est comprise entre environ 4000 Hz et 50000 Hz.

4. Procédé selon la revendication 2, caractérisé en ce que la fréquence de courant et la puissance vibratoire correspondante sont telles qu'elles impriment au produit une accélération d'au moins $6500 m.s^2$.

5. Procédé selon l'une des revendications 1 à 4, caractérisé en ce qu'on utilise plusieurs couples d'électroaimants, en ce qu'on les dispose face à des ventres de vibration du produit.

6. Dispositif pour la mise en oeuvre du procédé selon l'une des revendications 1 à 5 ayant au moins un bac pour traiter un produit métallique (1) dans une solution réactive (7), caractérisé en ce qu'il comprend dans ce bac au moins un couple d'électro-aimants (2, 3) disposés en regard l'un de l'autre de part et d'autre du produit métallique (1), pouvant être alimentés par des courants de même fréquence et exercer chacun sur le produit (1) ne force (F) d'attraction périodique, ces forces exercées par chaque électro-aimant étant déphasées, par exemple de $\pi/2$.

**7.** Dispositif selon la revendication 6, caractérisé en ce que les électro-aimants (2, 3) sont revêtus d'une enveloppe (6) de protection contre la solution réactive (7) dans laquelle ils sont au moins partiellement immergés, par exemple une enveloppe en polymère.

## Claims

**1.** Process for the surface treatment of a metal product (1) in a reactive solution (7), particularly for its cleaning or galvanization, according to which high frequency vibrations are applied to the product by means of electromagnets placed in front of said product, characterized in that use is made of at least one pair of electromagnets (2, 3) placed on either side of the latter and facing one another and they are supplied with alternating currents (I) of the same frequency and phase-shifted by $\pi/2$.

**2.** Process according to claim 1, characterized in that the frequency and amplitude of the high frequency vibrations are chosen in such a way as to give rise to cavitation phenomena in the vicinity of the surface of the product (1) in the reactive solution.

**3.** Process according to claim 2, in which the product is a calamine-containing steel sheet (1) immersed in an acid bath (7), characterized in that the frequency of the vibrations of the product is between approximately 4,000 and 50,000 Hz.

**4.** Process according to claim 2, characterized in that the current frequency and the corresponding vibrating power are such that they impart to the product an acceleration of at least 6,500 $m.s^2$.

**5.** Process according to any one of the claims 1 to 4, characterized in that use is made of several pairs of electromagnets and that they are positioned facing vibration nodes of the product.

**6.** Device for performing the process according to any one of the claims 1 to 5 having at least one tank for treating a metal product (1) in a reactive solution (7), characterized in that in the tank there is at least one pair of electromagnets (2, 3) positioned facing one another on either side of the metal product (1) and which can be supplied by currents of the same frequency and can each exert on the product (1) a periodic attraction force (F), said forces exerted by each electromagnet being phase-shifted. e. g. by $\pi/2$.

**7.** Device according to claim 6, characterized in that the electromagnets (2, 3) are coated with an envelope (6) giving protection against the reactive solution (7) in which they are at least partly immersed, e. g. a polymer envelope.

## Patentansprüche

**1.** Verfahren zur Oberflachenbehandlung eines metallischen Produktes (1), das sich in einer reaktiven Lösung (7) befindet, insbesondere zum Beizen oder für die Galvanisierung, bei dem man auf das Produkt Schwingungen hoher Frequenz mittels Elektromagneten aufgibt, die dem Produkt zugewandt angeordnet sind, dadurch gekennzeichnet, daß man wenigotono ein Paar Elekromagneten (2, 3) benutzt, die auf jeder Seite des letzteren und einander gegenüberliegend angeordnet sind, und man diese durch Wechselströme (I) derselben Frequenz und um $\pi/2$ phasenversetzt versorgt.

**2.** Verfahren nach Anspruch 1, dadurch gekennzeichnet, daß man die Frequenz und die Amplitude der Schwingungen hoher Frequenz derart wählt, daß in der reaktiven Lösung das Auftreten von Phänomenen der Hohlsogbildung in der Nähe der Oberfläche des Produktes (1) hervorgerufen wird.

**3.** Verfahren nach Anspruch 2, bei dem das Produkt ein Blech (1) aus verzundertem Stahl ist, in ein Säurebad (7) eingetaucht, dadurch gekennzeichnet, daß die Schwingungsfrequenz des Produktes zwischen ungefähr 4.000 Hz und 50.000 Hz liegt.

**4.** Verfahren nach Anspruch 2, dadurch gekennzeichnet, daß die Frequenz des Stromes und die entsprechende Schwingungsleistung derart sind, daß sie auf das Produkt eine Beschleunigung von wenigstens 6.500 $m.s^2$ aufgeben.

**5.** Verfahren nach einem der Ansprüche 1 bis 4, dadurch gekennzeichnet, daß man mehrere Paare von Elektromagneten verwendet, wobei man sie den Schwingungsbäuchen des Produktes zugewandt anordnet.

**6.** Vorrichtung zum Durchführen des Verfahrens nach einem der Ansprüche 1 bis 5, die wenigstens einen Behälter zum Behandeln eines metallischen Produktes (1) in einer reaktiven Lösung (7) hat, dadurch gekennzeichnet, daß sie in dem Behälter wenigstens ein Paar Elektromagnete (2, 3) aufweist, die einander gegenüber und beidseitig des metallischen Produktes (1) angeordnet sind, welche durch Ströme der gleichen Frequenz versorgt werden können und jede auf das Produkt (1) eine periodische Anziehungskraft (F) ausüben, wobei diese durch jeden Elektromagneten ausgeübten Kräfte phasenversetzt sind, beispielsweise um $\pi/2$.

7. Vorrichtung nach Anspruch 6, dadurch gekennzeichnet, daß die Elektromagneten (2, 3) mit einem Schutzumschlag (6) gegen die reaktive Lösung (7) überzogen sind, in die sie zumindest teilweise eingetaucht sind, beispielsweise einen Umschlag aus Polymer.

FIG.1

FIG.2

FIG.3

FIG.4

FIG.5

7